# EUROPEAN PATENT APPLICATION

(11) **EP 4 234 126 A1**
(43) Date of publication of application: **30.08.2023**
(21) Application number: 22158308.1
(22) Date of filing: 23.02.2022
(51) Int. Cl.: B22F 1/107, B22F 3/11, B22F 10/28, B33Y 10/00, B33Y 70/00

(54) **METALLIC FOAMS AND METHODS FOR PRODUCING THEM**

(71) Applicant: ETH Zurich, 8092 Zurich (CH)
(72) Inventor: STUDART, André, 8044 Zürich (CH); CARPENTER, Julia, 8052 Zurich (CH); PASSALEVA, Neri, 8046 Zürich (CH)

(57) **Abstract**

An aqueous suspension for producing porous metallic structures comprises 2-49 vol% of a mixture of at least one chemical compound comprising a metal atom, wherein said at least one compound is solid at room temperature, has the form of a powder, and is suspended in water, and 0.01-10% mol/mol of a surfactant.

## Description

### Field of the invention

The invention relates to aqueous suspensions for producing porous metallic structures, to methods for producing a porous metallic material, and to uses of such metallic materials.

### Background of the invention

Porous metals have long been used as filters in chemical processes and electrodes in functional devices. Steel and iron-based structures with highly tunable porosity have been explored as sustainable, lightweight materials for a variety of structural, biomedical, and energy-related applications.

Porous metals have been used as jewelry, filters and battery components [1-2] and have also been considered for lightweight construction, catalysis, thermal management, and tissue regeneration [3-9]. This broad range of established and prospective applications relies on the unique set of properties offered by the percolating metallic network combined with the low weight and the open channels provided by the porous phase.

Control over the porosity and pore size of the metallic structure allows for tuning of the properties of the porous metal to meet the requirements of specific applications. Manufacturing technologies directly affect the porosity and pore size of the final structure and therefore have been investigated to control the properties and functionalities of porous materials [10-13].

The advent of 3D printing has opened new opportunities for the design and fabrication of novel, bio-inspired hierarchical porous materials with antagonistic properties that are not accessible by conventional manufacturing [14]. This can potentially lead to bone-inspired structures that are simultaneously lightweight and mechanically efficient, as well as or filters inspired by marine sponges that combine high efficiency with a low pressure drop [15].

3D printing technologies utilized for the fabrication of porous and cellular metals include powder bed fusion [16-18], electron beam melting [19-20], various replication techniques [3, 7, 21], and direct ink writing [22-24]. Among the techniques that can generate large centimeter-scale objects, direct ink writing (DIW) is especially attractive due to the possibility to print complex structures at room temperature using readily available and low-cost desktop printers.

For printing cellular and porous iron by DIW, metal or metal oxide precursor particles are suspended in a binder-containing liquid phase to generate a viscoelastic ink that later is extruded through a sub-millimeter nozzle [23, 25]. The printed cellular structures are then dried, reduced, and sintered to densify the deposited filaments [26]. The resulting metallic structures exhibit open cells, the size and relative fraction of which are the result of the tool path of the printing nozzle. Despite the biocompatibility, the mechanical properties, and the electrochemical response demonstrated so far [23, 25], the potential of direct ink writing as a tool to manufacture metals with tunable hierarchical porous architectures could not yet be fully exploited.

A strategy to control the porosity of materials across multiple length scales is to print inks or resins containing building blocks that generate porosity through predeterminable self-assembly processes [27-29]. In this approach, the large pores created through the tool path are combined with the small pores arising from the self-assembling ink to create structural features below the printer's resolution. Air bubbles, liquid droplets, or organic particles have been used as self-assembling building blocks to print ceramics and polymers with programmable hierarchical porosity [27, 30-31]. Porous silica-based glasses with tunable multiscale pores have also been created by Digital Light Processing (DLP) of phase-separating resins containing self-assembling monomers and metal alkoxide precursors [29].

GB 339645 discloses a process in which metal oxide powder is suspended in water, more than 1 wt% foam producing agents are added, the resulting foam is cast, the casted foam is dried, and the dried foam is reduced to a porous metall. A maximum porosity of 80% is reached.

US 2009/0325780 A1 discloses the preparation of wet foams exhibiting long-term stability, wherein colloidal particles are used to stabilize the gas-liquid interface, said particles being initially inherently partially lyophobic particles or partially lyophobized particles having mean particle sizes from 1 nm to 20 µm.

US 2021/0130244 A1 discloses another method for producing particle-stabilized foams.

WO 2016/187097 A1 discloses a particle-stabilized foam ink composition that can be used for 3D printing hierarchical porous structures by continuous filament deposition of particle-stabilized ink. To achieve partial open porosity, fugitive particles comprising a polymer or carbon must be added to the foam ink composition. If a metal foam is desired, the foam ink composition can include metal oxide or metal hydride particles, and a reducing or oxidizing step follows the deposition and drying of the continuous filament.

C. Kenel et al., Addit. Manuf. 2021, 37, 101637 (Ref. discloses the production of hierarchically porous metallic scaffolds via 3D extrusion and reduction of oxide particle inks with salt space-holders. Metal structures with three-level hierarchical porosity can be printed using an ink containing iron oxide particles as metal precursors and dissolvable salt space holders as sacrificial templates [32]. This process leads to relatively low porosity (< 38% for iron).

A. Verdooren et al., J. Mat. Sc. 2005, 40, 4333 disclose a method for producing a ceramic foam using a precursor containing iron (III) oxide, calcium oxide, aluminum, and carbon black in an acidic solution comprising 50 wt% of aluminum orthophosphate. The foaming is the result of generated hydrogen gas. A similar method using a precursor containing iron (III) oxide, magnesium oxide, aluminum, and carbon black of is disclosed in A. Verdooren et al., J. Am. Ceram. Soc. 2006, 89, 3101.

C. Minas et al., Adv. Mat. 2016, 28, 9993 (Ref. 27) discloses a method for producing particle-stabilized foams and emulsions of metal oxide particles with closed and open porosity.

US 2015/0035209 A1 discloses a method for forming metal in which a paste comprising metal oxide particles, a polymeric binder and an organic solvent is extruded through a tip to deposit sequential layers of the metal oxide paste on a substrate to form a three-dimensional object. The object is exposed to a reducing gas at a temperature and for a time period sufficient to reduce and to sinter the metal oxide particles to form a three-dimensional metallic object.

WO 2015/175880 A1 discloses 3D printable ink compositions including metal oxide particles and an elastic polymer binder.

WO 2020/243428 A1 discloses wet foam compositions for producing sintered open-cell ceramic foams.

There is a general need for improvements in this field.

### Summary of the Invention

It is the overall objective of the present invention to provide improvements in the manufacture of metal foams and porous metallic structures.

In the context of this specification, the terms metal foam and porous metallic structure are used synonymously.

One object of the invention is to provide advantageous aqueous suspension for producing porous metallic structures that allow the additive manufacturing of three-dimensional objects that in a subsequent step can be converted to porous metallic structures.

Another object of the invention is to provide methods for producing porous metallic materials.

Yet another object of the invention is to provide advantageous uses and applications of such porous metallic materials.

These and other objects are substantially achieved through the features of the independent claims. Advantageous embodiments and variants are set forth in the dependent claims.

Further aspects of the present invention become evident as this description proceeds.

The present invention may comprise one or more of the features recited in the attached claims, and/or one or more of the following features and combinations thereof.

A first aspect of the invention concerns an aqueous suspension for producing porous metallic structures.

An aqueous suspension according to the invention comprises 2-49 vol% of a mixture of at least one chemical compound comprising a metal atom, wherein said at least one compound is solid at room temperature, has the form of a powder, and is suspended in water, and comprises 0.01-10 % mol/mol of a surfactant.

Such an aqueous suspension according to the invention can be used to produce a stable wet foam or a stable emulsion usable as an ink for additive manufacturing, particularly for Direct Ink Writing.

The particle size of the powdery chemical compound comprising a metal atom advantageously lies between 0.03 and 5 µm.

Advantageously, an aqueous composition according to the invention is a foam or an emulsion.

More advantageously, an aqueous composition according to the invention is a foam or an oil-in-water emulsion with a solid loading of 2-49 vol%.

Alternatively, or in addition, the bubble size of an advantageous foamed aqueous composition according to the invention lies between 20 µm and 2 mm. Correspondingly, in an emulsion based on the aqueous suspension according to the invention, the diameter of the emulsion droplets lies between 5 µm and 2 mm.

Advantageously, in an aqueous suspension according to the invention, one or more of said chemical compounds comprising a metal atom is a compound that is reducible to metal in a gaseous atmosphere.

In addition, or alternatively, in an aqueous suspension according to the invention one or more of said chemical compounds comprising a metal atom can be a metal oxide, a metal hydroxide, a metal chloride, or a metal fluoride.

For example, oxides or hydroxides of Fe, Cr, Zn, Al, Mn, Sn, Pb, Co, Ni, Cu, Mo, Ta, W can be used as metal atom comprising chemical compounds. Such compounds can be reduced in a hydrogen atmosphere at a temperature between 200 and 800 °C.

Iron oxide, e.g. magnetite, optionally in combination with NiO, and/or Cr₂O₃, is particularly advantageous, since it allows to produce steel foams, the necessary carbon originating from organic compounds in the aqueous suspension.

AgCI or PdCl₂ can be as the metal atom comprising chemical compound and can be reduced under hydrogen atmosphere at 200-900 °C (for AgCl) or 500-800 °C (for PdCl₂). Porous palladium structures are particularly useful for heterogeneous catalysis.

Also, MgF₂ can be used as metal atom comprising chemical compound. Porous magnesium structures can be used a biocompatible bone scaffold.

Metallic structures can be obtained with such a suspension by reducing, and optionally sintering, dried structures previously additively manufactured with such a suspension.

The reduction parameters, particularly the temperature, depend on the particle size. On one hand, the kinetics depend on the surface area and the thickness of the particles, and on the other hand, the sintering process may also take place in parallel to the reduction process.

Advantageously, in such an aqueous suspension according to the invention the metal oxide powder is Fe₃O₄, or NiO, or a mixture thereof. Particularly, such a variant of the invention allows to produce ferrous metallic foams and steel foams.

Even more advantageously, in such an aqueous suspension according to the invention, the particles of the metal oxide powder have a prolate shape. This improves the rheological characteristics and the stability of the aqueous suspension after foaming.

In another advantageous variant of the invention, one or more of said chemical compounds comprising a metal atom in the aqueous suspension comprises a metal hydride, for example TiHₓ, PdHₓ, ZrHₓ, or MgH₂.

Such a variant of the invention allows to obtain metallic structures by subjecting dried structures previously additively manufactured with such a suspension to elevated temperatures at which the molecular hydrogen leaves the crystal structure of the metal.

For TiHₓ, a suitable temperature range lies between 350 and 600 °C. For ZrHₓ, a suitable temperature range lies between 600 and 1000 °C. For MgH₂, a suitable temperature range lies between 200 and 500 °C.

In yet another advantageous variant of the invention, one or more of said metal atom comprising chemical compounds is a metal carbonyl compound, for example Rh₂(CO)₈, or Ru(CO)₅.

Such a variant of the invention allows to obtain metallic structures by subjecting dried structures previously additively manufactured with such a suspension to elevated temperatures at which the metal carbonyl decomposes into the metal and carbon monoxide gas.

For Rh₂(CO)₈, a suitable temperature range lies between 200 and 600 °C. For Ru(CO)s, a suitable temperature range lies between 300 and 700 °C.

Advantageously, cationic surfactants are used as a surfactant in aqueous suspensions according to the invention, for example hexylamine.

Non-ionic surfactant can also be advantageously used as a surfactant in aqueous suspensions according to the invention, for example octyl gallate.

For hexylamine, an advantageous surfactant concentration lies between 0.01 and 0.05 mmol/g. The amount of surfactant is advantageously adjusted to the length of the hydrocarbon chain of the surfactant.

Advantageously, the aqueous suspension according to the invention is foamed with a gas, for example air or an inert gas.

Such a foamed aqueous suspension allows to produce mechanically stable metallic structures with hierarchical porosity over several orders of magnitude. On a first level in the macroscopic scale, porosity is controllably produced within the additive manufacturing process. On a second, smaller level, porosity results from the cells of the foamed aqueous suspension. In the micrometer range, a third level of porosity can be found on the walls of the cells of the second levels, where holes in the cell walls connect the cells. The result is an open pore structure.

Without wishing to be bound to any specific theory, it is assumed that this third level of porosity is the result of rearranging processes of the metal atoms at elevated temperatures, for example during a sintering step.

In another advantageous variant of an aqueous suspension according to the invention, the aqueous suspension is emulsified with 30-80 vol% of a lipophilic organic solvent, for example n-octane.

The droplets of such an oil-in-water emulsion provide a scaffold for the formation of macropores, similar to foam bubbles. The lipophilic organic solvent is advantageously chosen such that the boiling point (n-octane: 125-127 °C) is above the boiling point of water, but in a similar range. The printed emulsion-based ink will remain stable mechanically when the printed object is dried, and the organic solvent can be removed in the same step as the water.

An aqueous suspension according to the invention preferably comprises 0.01-20 g/l of a binder, depending on the density and the chain length, e.g. methylcellulose, PVA (poly vinyl alcohol), or PVP (poly vinyl pyrrolidone), or a mixture thereof.

The use of such a binder allows to stabilize the foam or emulsion, and also temporarily stabilizes the dry structure after drying the printed object.

A second aspect of the invention concerns methods for producing porous metallic materials. In a

A method according to the invention for producing a porous metallic material comprises the steps:
- providing an aqueous suspension according to any of claims 1 to 8; comprising a mixture of at least one chemical compound comprising a metal atom;
- foaming said aqueous suspension to a foam, or emulsifying said aqueous suspension to an emulsion;
- forming with said foam or emulsion a three-dimensional structure;
- drying said three-dimensional structure, resulting in a dry structure; and
- subjecting the dry structure to process conditions that result in the conversion of the chemical compounds comprising a metal atom to metal, resulting in a metallic structure.

In a method according to the invention, the metallic structure is advantageously sintered.

The method according to the invention has the advantage that small particles (e.g. 0.03-5 µm) of metal containing compounds can be produced more cost effectively than metal particles of similar size. Furthermore, such pulverulent compounds are inflammable or less flammable of corresponding pulverulent metals and are not prone to oxidation of the particle surface.

The foaming step can be carried out mechanically, for example by stirring. Alternatively, the foaming can be achieved in situ by decomposition of a suitable chemical compound, for example hydrogen peroxide.

In an advantageous variant of the method according to the invention, one or more of said chemical compounds comprising a metal atom is a compound that is reducible to metal in a gaseous atmosphere; and the dry structure is reduced by subjecting it to a reducing atmosphere, resulting in a metallic structure.

More advantageously, the reduction is carried out in an atmosphere of 0.5-100 vol% H₂ in an inert gas.

The temperature at which the reduction process is carried out depends on the metal ions to be reduced. For Fe₃O₄ as the metal containing compound, said temperature advantageously lies between 600 and 1000 °C.

The resulting iron foam can have an air content of 75-98 vol%. The density of the resulting iron foam can lie in the range of 0.4-2 g/cm². The relative density can be 0.03 to 0.5, compared to massive iron.

In another advantageous variant of a method according to the method, one or more of said chemical compounds comprising a metal atom is an interstitial metal hydride; and the dry structure is subjected to a temperature under which the hydrogen is released as hydrogen gas, resulting in a metallic structure.

Advantageously, in the discussed methods according to the invention, the processing step resulting in the metallic structure and the sintering step are carried out in one process step.

It is also advantageous if in a method according to the invention, the three-dimensional structure is formed by additive manufacturing, for example by three-dimensional printing.

In an advantageous variant of the method according to the invention, the surface of the metallic structure is hydrophobized or lipophilized. This allows for the use of the produced metallic structures for efficiently absorbing lipophilic compounds, such as for example spilled oil floating on water surfaces.

In another advantageous variant of the method according to the invention, after the reduction step, the metallic structure is at least partially oxidized.

A third aspect of the invention concerns advantageous uses and applications of porous metallic structures according to the invention.

A metallic material according to the invention is produced according to a method of the invention.

In an advantageous use according to the invention, such a metallic material according to the invention is used as a resistive heating element.

When an electric current is lead through the material, thereby producing heat in the metal matrix of the material, the large surface of the porous metallic material and its open cell structure allows for an efficient heating of gases or liquids in the pores of the material. For example, a metallic material according to the invention can be used for vaporizing liquids by restive heating.

In another advantageous use according to the invention, a metallic material according to the invention is used as a cooling element.

Such an advantageous use can be realized by heat conductively contacting said material with a Peltier element.

In a further advantageous use according to the invention, a metallic material according to the invention is used for absorbing lipophilic substances floating on water.

For this use, the metallic material is hydrophobized before corresponding metal foam bodies are brought into contact with a lipophilic substance, such as for example oil spilled on water. The hydrophobized surface of the porous metallic structure increases the surface tension between the surface and water, which slows down the intrusion of water into the air-filled of the metal foam. The metal foam bodies, having an overall density lower than water, float on the surface. Oil that comes into contact with the metal foam body will be drawn into the pores of the metal foam by the capillary effect of the open cell structure. This allows to efficiently absorb the lipophilic substance on the extended surface and the pores and capillaries of the metal foam body.

A metal foam body that has its pores completely filled with oil has then finally an overall density higher than water. The metal foam body will no longer float and will sink. Such hydrophobized metal foam bodies thus allow cleaning of oil spills on water bodies where collecting the oil from the surface is difficult or impossible, for example offshore. The metal foam bodies will sink to the bottom together with the absorbed oil, where they ill eventually be covered by sediment.

For such applications, preferably iron is used as the metal, due to its comparably low price and absent toxicity.

Alternatively, floating metal foam bodies partially filled with oil can be collected from the surface by using magnets or sieves.

In yet another advantageous use according to the invention, a metallic material according to the invention is used as a heterogeneous catalyst or as a carrier structure for a heterogenous catalyst.

In further advantageous use according to the invention, a metallic material according to the invention is used as a filtration element.

### Brief description of the drawings

In order to facilitate a fuller understanding of the present invention, reference is now made to the appended drawings and figures. These references should not be construed as limiting the present invention and are intended to be exemplary only.

Components that are identical, or that are identical at least in terms of their function, are designated below by identical or similar reference numbers.
- Figure 1: schematically shows the manufacturing process of iron-based hierarchical porous structures according to the invention.
- Figure 2: shows strain-controlled oscillatory rheology measurements on a foamed aqueous suspensions according to the invention.
- Figure 3: shows the 3D-printing process forming the wet foam body.
- Figure 4: shows (a) the heating protocol of the reducing step applied to the green body of Figure 5, and (b) the XRD spectrum of the resulting fully reduced sample.
- Figure 5: shows the hierarchical pore structure of a green body after 3D printing the ink of Figure 2.
- Figure 6: shows the hierarchical pore structure of the metal body after full reduction of the green body of Figure 5.
- Figure 7: shows microstructures iron-based porous structures according to the invention, subjected to different processing parameters.
- Figure 8: shows measurements of different mechanical properties of the iron-based porous structures of Figure 7.
- Figure 9: shows also mechanical properties of the iron foams of Figure 7, (a) stress-strain curves for an extended range of applied strain, and (b) averaged mechanical properties of the samples obtained from the stress-strain data.
- Figure 10: shows an XRD spectrum of a nickel-iron alloy based metal foam according to the invention (7 wt% Ni, 850 °C, 30 h) with purely austenitic atomic structure.
- Figure 11: shows a SEM image of the nickel-iron alloy metal foam of Figure 10.
- Figure 12: shows (a) the averaged relative density, (b) the density, (c) the compressive modulus, and (d) the strength of nickel-iron alloy metal foams with different Ni content, for two different sintering temperatures.
- Figure 13: shows the Weibull distribution for the strength of the nickel-iron alloy metal foam in Figure 12 containing 28 wt% Ni and sintered at 1000°C for 30 h.
- Figure 14: shows different examples of iron-based foams according to the invention, from left to right: unreduced magnetite foam, maghemite foam obtained upon oxidation of magnetite at 550 °C for 2 h, 37 wt% maghemite and 63 wt% hematite foam obtained upon oxidation of magnetite at 650 °C for 2h, sintered hematite foam obtained by sintering at 1000 °C for 2 h.
- Figure 15: shows the composition of crystalline phases present in an iron porous structure (850 °C for 30 h) after corrosion in phosphate buffer (37 °C) for 1-90 days, determined by Rietveld fitted XRD spectra.
- Figure 16: shows SEM images of an iron based porous structure sample sintered at 850 °C for 30 h, and subsequently corroded in phosphate buffer solution (37 °C) for 3 days.
- Figure 17: shows (a) the compressive modulus, and (b) the strength of an iron-nickel based metallic foam according to the invention.
- Figure 18: shows the surface area of printed structures prepared from foams containing different fractions of iron oxide particles and heat-treated at distinct reduction/sintering conditions.
- Figure 19: shows SEM images of printed structures prepared from metal foams containing different fractions of iron oxide particles and heat-treated at distinct reduction/sintering conditions.
- Figure 20: shows resistive heating of iron-based foams for vaporization of liquids. (a) shows time-lapsed infrared images of a 35% Fe foam (5.6 Ω at room temperature) subjected to an electric voltage at 3 W power. (b) displays the average temperature profile of the area marked in (a), with the time points of the snapshots in (a) being indicated with dashed lines in (f). (c) shows an optical image and a thermal images (small figure lower right corner) of ondemand liquid evaporation via resistive heating using a foam infused with etheric oil (limonene, 0.4 mL/g).
- Figure 21: shows iron-based foam elements with low density (< 1 g/cm³) and with their surface modified with hydrophobic fumed silica, absorbing oil while floating on water.
- Figure 22: shows a metal foam produced by 3D printing of an emulsion based ink, (a) after printing, and (b) SEM image before sintering.
- Figure 23: shows a plot of a stress-strain measurement of an iron-nickel based metallic foam.
- Figure 24: shows the relative compressive modulus vs. the relative density of different metal foams after a first and a second measurement.
- Figure 25: shows different aspects of measurements regarding a novel stiffening effect of metal foams according to the invention.
- Figure 26: shows changes of the compressive modulus of a metal foam body according to the invention after a series of uniaxial compressions along different axes.
- Figure 27: shows the engineering strain in low-carbon metal foams extracted from digital image correlation (a,c,f) with the corresponding Froce-Stroke (b) and Stress-Strain curves (d).
- Figure 28: illustrates an assumed mechanism of strain stiffening, with (a), (b), (c) a schematic stress-strain curve; (d) a schematic depiction of the porosity of an metal foam according to the invention on three different length scales; and (e) and SEM images (second and third image) on a real metal foam sample after a first compression cycle.
- Figure 29: shows (a) a stress-strain measurement on a metal foam sample, over the complete range of elasticity, yielding and densification, with a repeated release of the sample; (b) the detail view of the measured stress-strain curve of (a) in the elastic range; (c) the elastic modulus E obtained from the measurement in (a), plotted against the strain; and (d) the obtained elastic modulus plotted against the solid content ratio of the sample.

The present invention is not to be limited in scope by the specific embodiments described herein. Indeed, various modifications of the present invention, in addition to those described herein, will be apparent to those skilled in the art from the foregoing description and accompanying drawings. Thus, such modifications are intended to fall within the scope of the appended claims. Additionally, various references are cited throughout the specification, the disclosures of which are each incorporated herein by reference in their entirety.

### Detailed description of the invention

An aqueous suspension of metal atom containing precursor particles according to the invention allows to realize an extrusion-based 3D printing process for manufacturing metal foams, for example steel or iron-based porous structures with ultra-high porosity distributed over three hierarchical levels. The precursor particles also stabilize the foamed ink.

Using particle-stabilized foams of aqueous suspensions according to the invention as 3D printing inks, pores can by generated at multiple length scales. On a first length scale, porosity can be directly controlled by the printing pattern of the foam filament. On a second, smaller length scale, gas bubbles of the foamed inks serve as templates for the formation of a large fraction of mesopores within the printed filaments. The structure can be controlled via the concentration and distribution of the bubbles in the ink. On a third, even smaller length scale, porosity results from the thermal process leading to conversion of the suspended precursor particles (for example reduction with hydrogen gas in the case of iron oxide particles) and an optional sintering process.

This enables for example the manufacturing of iron and iron-based alloys with an elastic modulus above 300 MPa and a density below 1 g/cm³, which is in keeping with the mechanical efficiency expected for porous structures.

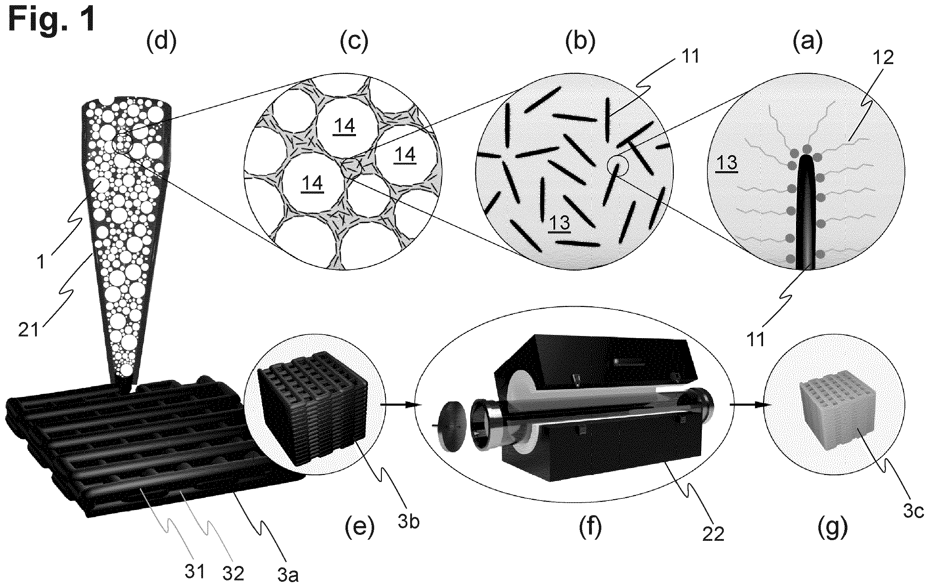

The advantageous manufacturing process for such iron-based metal foams is schematically shown in Figure 1. The manufacturing of iron-based hierarchical porous structures is a two-step process that in a first step involves the preparation of wet foam inks stabilized by modified particles and in a second step the 3D printing of the wet foam inks, to a three-dimensional structure, followed by reduction and sintering of the dried printed structures.

The stabilization of wet foams with particles can be achieved by decreasing the wettability of the particles in a liquid and thus promoting their adsorption to the air/water interface. Particle adsorption reduces the total interfacial area and decreases the free energy of the system. This energy gain can easily be orders of magnitude higher than thermal energy, implying that the adsorption is an irreversible process [33]. The irreversible particle adsorption renders the foams nearly immune to common foam destabilization processes, such as liquid drainage, collapse by lamellar breakage, and Ostwald ripening [34].

Oblong magnetite micro particles 11 are functionalized with a short-chain amphiphilic molecule 12, Figure 1(a), to produce an aqueous 13 suspension, Figure 1(b). After frothing the suspension, the result is a foamed ink 1 with gas bubbles 14 stabilized by the oblong magnetite particles 11, Figure 1(c).

It was experimentally found that the functionalization of magnetite particles with hexylamine (3 µl/g particles) provides the ideal wettability to promote adsorption at the air/water interface and thus generate strong, stable foams upon air incorporation. To prepare such stable foams, magnetite particles are first suspended and de-agglomerated in water containing the short-chain amphiphile hexylamine. The molecule's positively charged polar head group absorbs to the negatively charged particle surface due to electrostatic interactions. This makes the hydrophobic tail of the amphiphile protrude outwards and render the entire particle slightly hydrophobic. Mechanical frothing of the suspension of modified particles eventually leads to the desired ultra-stable foams. A particle volume fraction of 50 wt% and an optimized foaming procedure (10 min at 800 rpm) provide the additional rheological requirements for printing.

This stabilized viscoelastic ink 1 can then be used in a Direct Ink Writing (DIW) process for additively forming a three-dimensional structure 3a, Figure 1(d). The particle-stabilized foamed ink 1 is printed layer-by-layer, by extruding the foamed ink 1 through a printing nozzle 21 at room temperature and depositing it as a continuous foam filament 31.

The DIW approach is especially suitable to fabricate open cell structures, such as grid-like and open cellular designs.

There are three rheological requirements for most direct ink writing inks: First, the ink must be shear thinning, which allows the material to flow through the nozzle at low pressures. Second, it must have a high yield stress, below which the ink does not flow, to ensure that the material remains in place after printing. Third, the ink must also show a high storage modulus to prevent the sagging of spanning filaments in grid-like structures. For compressible foams, the printing conditions also need to be adjusted to ensure continuous deposition rather than stop-and-go extrusion [35].

After drying of the printed wet foam body 3a, the resulting green body 3b (Figure 1(e)) retains the cellular structure of the foam. The green body 3b is reduced and sintered in a tubular 22 oven under constant H₂ gas flow, Figure 1(e), to a highly porous, light-weight iron foam element 3b, Figure 1(f).

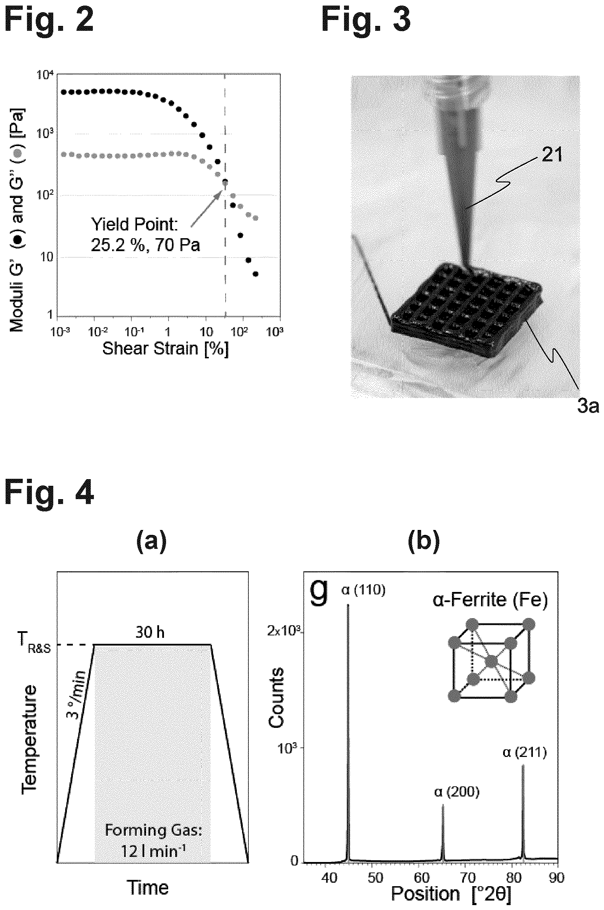

To quantify the rheological behavior and the viscoelastic properties of the particle-stabilized wet foams, strain-controlled oscillatory rheology measurements were performed (cf. Figure 2). The investigated wet foam comprised 50 wt% iron oxide particles (50 wt%) 3 µl hexylamine per g iron oxide. The foam shows a clear viscoelastic response with a storage modulus plateau at low strains and a well-defined yield stress (cf. Figure 2). The measured yield stress of 70 Pa is not far from the range recommended for DIW inks (100 - 5000 Pa) [36]. With a high plateau storage modulus of 4.86 kPa, the foams are also stiff enough to enable direct ink writing of grid-like architectures.

DIW printing of the viscoelastic wet foam using a desktop extrusion-based printer equipped with a syringe and nozzle size of 0.84 mm leads to a three-dimensional object 3a (cf. Figure 3). To create a hierarchical architecture, a grid-like design was chosen, where the print path controls the size of the open cells, which will hereafter be referred to as macropores 32. Such macropores constitute the first level of the hierarchical porosity of the metallic material according to the invention.

The ability to print distortion-free grids confirms the suitable rheological properties of the ink and indicates that the wet foams are resistant to the high shear forces applied during extrusion-based printing, which could otherwise cause phase separation and bubble collapse. Moreover, the experiments revealed that the high stability and viscoelastic nature of the particle-stabilized wet foams mitigate any compressibility issues under typical printing conditions.

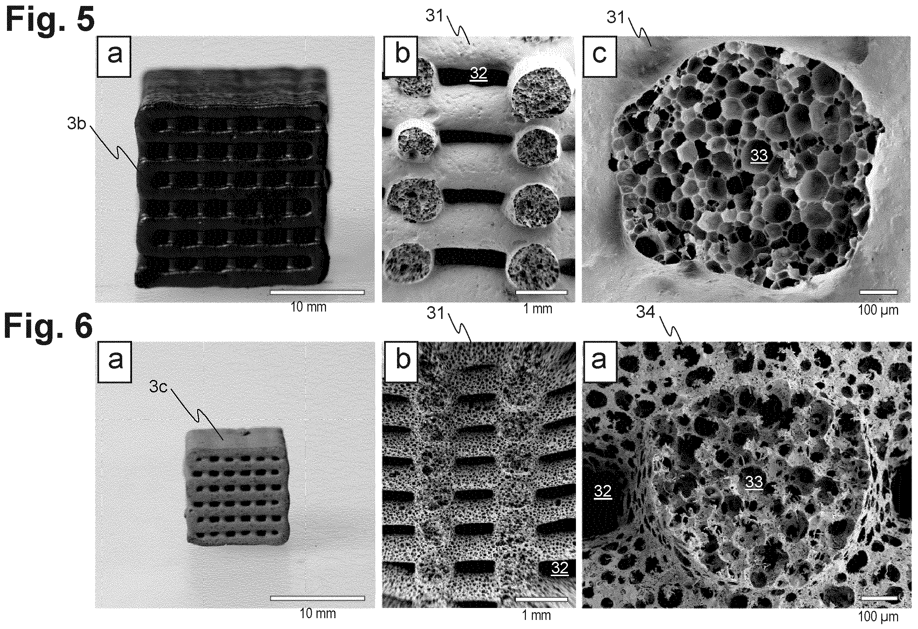

After printing, the wet foam object 3a is dried at 60 °C for 1 h, leaving in the in the grid-like structure of the resulting green body 3b (cf. Figure 5(a)) only the solid precursor particles and remaining organic compounds. Drying leads to the formation of the second hierarchical level of the structure, which consists of spherical pores 33 originating from the former foam cells of the wet foam, as can be seen in the SEM images in Figures 5(b) and (c). The dried structure of the green body 3b shows a closed-cell porosity with an average pore size of 45.6 µm. Because they fall in an intermediate size range, these spherical pores will hereinafter referred to as mesopores 33.

The size of these mesopores can be adjusted by the volume fraction of particles, amphiphile concentration, and foaming speed. Generally, increasing the particle and the amphiphile content will increase the suspension viscosity, and thereby reduce the size of the bubbles due to the higher shear stresses generated during mechanical frothing. The increased shear resulting from higher foaming speeds can also reduce the bubble size.

The green body 3b can be converted into a hierarchically porous metal body 3c by thermal treatment under a reducing atmosphere at temperatures ranging from 690 to 1000 °C. The green body 3b of Figure 5 was heat-treated under a forming gas stream of 5% H2 and 95% N2 for 30 hours at 850°C. The corresponding temperature profile is shown in Figure 4(a). The XRD spectrum of the fully reduced metal body 3c shows clear correlation with the diffraction peaks expected for a ferritic (a-Fe) atomic structure, thereby proofing a complete reduction of the initial magnetite to ferritic iron (cf. Figure 4(b)). Under the given parameters, sintering took take parallel to reduction of the magnetite particles to iron particles. Chemical analysis of the reduced samples revealed that the porous iron structure contains 0.204 ± 0.077 wt% carbon, with organic compounds in the wet foam being the carbon source.

The combined reduction and sintering process leads to a linear shrinkage of approx. 50%, as can be seen when comparing the metal foam body 3c shown in Figure 6(a) to the green body 3b shown in Figure 5(a). Reduction and sintering also lead to an opening of the closed-celled mesopores 32 created during foaming, as can be seen in the SEM images of Figures 6(b) and (c), resulting in the formation of micropores 34 in the walls of the bubble-templated mesopores 33. Combined with the macropores 32 created by the print path, this leads to a unique open-celled porous structure with three levels of hierarchical porosity.

To demonstrate the possibility of adjusting the bubble size, and thus of the mesopores of the material according to the invention, the particle concentration of the foam was reduced from 50 wt%, as in the example discussed above, to 40 wt%, while keeping the amphiphile concentration and the foaming procedure constant. Foams with such lower particle concentration were found to be still sufficiently stiff enough for 3D-printing grid-like structures. Foams with 40 wt% particles lead to larger mesopores with an average diameter of 125.1 µm.

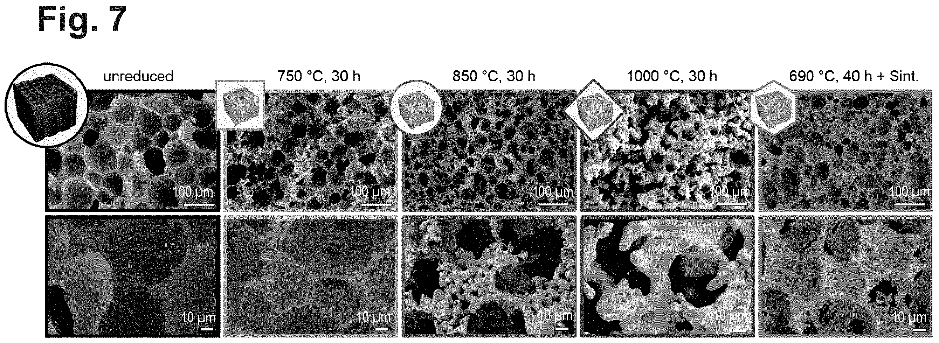

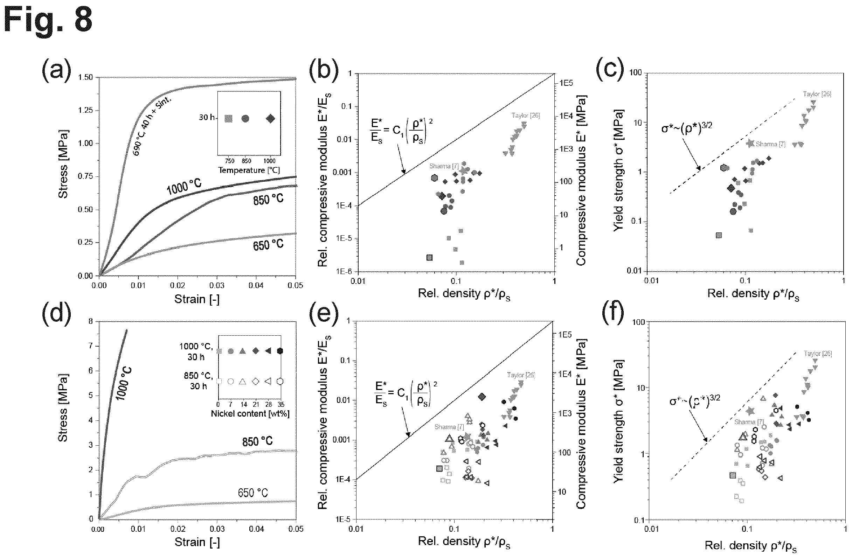

The reduction process is affected by several factors, including sample volume, gas flow, H₂ and H₂O content of the reducing gas, oxide particle size, and temperature. Depending on the temperature and particle size, the reduction is also accompanied by sintering processes of the metal particles and metal oxide particles. To explore part of this ample processing parameter space, the effect of different reduction protocols on the microstructure, relative density, and mechanical properties of the resulting hierarchical porous materials was investigated. To this end, specimens produced with the 50 wt% magnetite ink discussed above were systematically heat-treated for 30 hours at 750 °C, 850 °C, and 1000 °C, and for optimized conditions (40 hours at 690 °C). SEM images of the green body prior to reduction and the metal foam after reduction are shown in Figure 7. Several mechanical properties of the samples have been measured, with the results shown in Figures 8(a), (b) and (c). The symbols used in the plots correspond to the square, circle, diamond and hexagon symbols of the respective samples in Figure 7.

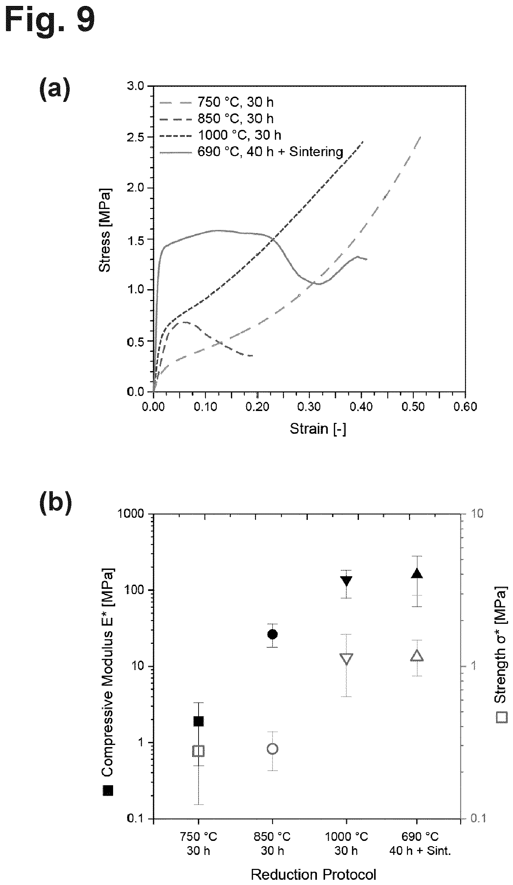

Figure 8(a) shows a plot of the stress-strain curves for a sample reduced and sintered under optimized conditions (690°C, 40h, sintered) in comparison to samples reduced at 750 °C, 850 °C, and 1000 °C, for 30h. Figure 9(a) shows the stress-strain curves of the samples for an extended range of strain, while Figure 9(b) shows the elasticity modulus and the yield strength obtained from the stress-strain data.

Figure 8(b) shows the absolute and relative compressive modulus (compared to the solid material) plotted vs. the relative density compared to the solid metal. Figure 8(c) shows the yield strength as plotted vs. the relative density compared to the solid metal. Literature data for iron-based printed structures without templated macroporosity are displayed for comparison. (grey triangles, Taylor et al. [26]; grey star, Sharma et al. [7]). Theoretical scaling dependences expected from an open-cell foam model are also displayed (cf. L. J. Gibson, M. F. Ashby, Proceedings of the Royal Society of London. Series A, Mathematical and Physical Sciences 1982, 382, 43).

A marked change can be observed in the microstructure of samples heat-treated between 750 °C and 1000 °C (Figure 7). Heat treatment at 750 °C was found to be sufficient for the formation of micro-pores on the walls of meso-pores, while preserving the original foam-like architecture of the green body. At 850 °C, the micropores increase significantly in size, but the foam-templated mesopores remain visible. Increasing the temperature to 1000 °C results in a lower surface area and in the fusion of the micro-pores with the meso-pores. This leads to an open-celled network with only two levels of hierarchical porosity.

Along with the microstructural changes, the determined carbon content decreases from 0.20 ± 0.08% at 850 °C to only 0.05 ± 0.01% C at 1000 °C. Such a reduction is likely caused by the long exposure of the high-surface area structure to high temperatures, which allows for carbon diffusion out of the material. From this microstructural analysis, it is concluded that high temperatures should be avoided in order to retain a high carbon content and a three-level hierarchical porosity.

Particularly advantageous hierarchical steel structures with 3-level porosity were eventually obtained by employing a two-step procedure, in which samples are first fully reduced at 690 °C for 40 h and afterward sintered for 2 h at 850 °C. This provides the microstructure of samples reduced at low temperature, but with the thicker struts resulting from sintering.

The mechanical characterization reveals that the elastic modulus and the compressive yield strength of the porous metal structures increase with the heat-treatment temperature (Figures 8(a), 9(a), (b)). Since the relative density of all samples remained within the comparable range between 0.053 and 0.268, this stiffening effect can be attributed to the stronger solid network formed for samples sintered at high temperatures. The optimum heat treatment protocol provides by far the stiffest and strongest structures, while retaining an very low average density of 0.86 ± 0.03 g/cm³.

To compare these hierarchical porous structures with other iron-based porous materials, the mechanical data are shown in an Ashby-type plot depicting the effect of the relative density on the elastic modulus and compressive strength of previously reported structures (Figures 8(b), (c)). Compared to state-of-the-art materials [7, 26], it is found that the presence of three hierarchical levels in the porous structures according to this disclosure leads to significantly lower relative densities, which lie within a previously inaccessible parameter range. Importantly, the elastic modulus and compressive strength of the materials according to this disclosure follow a similar dependence on the relative density as that observed for the reference structures. This dependence is in good agreement with theoretical predictions from the Ashby-Gibson model for open-cell foams, thus indicating that the shown novel materials combine very low weight with the maximum achievable properties. By reducing the relative density without sacrificing the predicted properties, the hierarchical porous structures reach state-of-the-art mechanical efficiency using 30% less solid phase.

The proposed hierarchical pore design can be extended to a range of other iron oxides and iron-based alloys. To illustrate this, hierarchical porous Ni-Fe alloys using NiO and Fe₃O₄ particles as inorganic precursors in the initial printable foam. Nickel is a common alloying material for steel, as it ensures that the steel retains its tough high-temperature crystal structure, austenite.

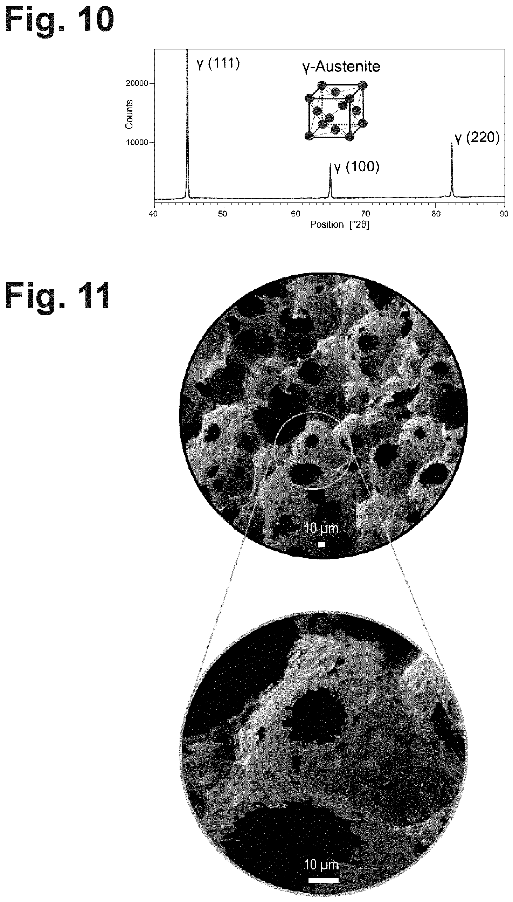

The nickel content in the alloy can be controlled precisely by tuning the relative fraction of the oxide powders used in the foam formulation. This was validated by elemental analysis (Proton Induced X-Ray Emission) of an alloy designed to contain 28 wt% (calculated) nickel. After heat treatment of the dried precursor foam, the alloy was found to contain 27.3 wt% Ni atoms. X-ray diffraction analysis confirmed the formation of austenite in the heat-treated Ni-Fe alloy (Figure 10). Interestingly, the microstructure of the Ni-Fe porous structure was observed to be independent of the sintering parameters and Ni-alloying content (Figure 11).

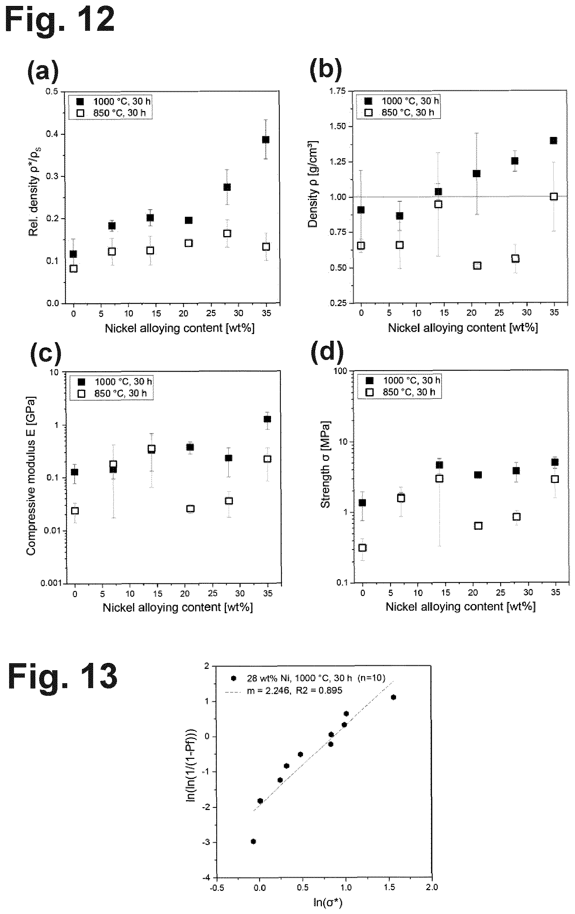

Figures 8(d), (e) and (f) show the results of measurements equivalent to Figures 8(a), (b), (c) for metal foam samples produced with different process temperatures and with varying nickel content in the final metal foam, namely 0, 7, 14, 21, 28 and 35 wt% Ni, with the remaining part being iron. Note that in Figure 8(d), the curve for the 21 wt% Ni sample stops before the sample has yielded, due to technical limits. Again all data are compared to the literature data obtained for iron-based printed structures without templated macroporosity (grey triangles, Taylor et al. [26]; grey star, Sharma et al. [7]). Theoretical scaling dependences expected from an open-cell foam model are also displayed (Gibson, Ashby, 1993). Figure 12 shows (a) the relative density, (b) the density, (c) the elasticity modulus, and (d) the yield strength for the same nickel-iron alloy metal foams, for two different sintering temperatures. Figure 13 shows the Weibull distribution for the strength of the nickel-iron alloy metal foam in Figure 12 containing 28 wt% Ni and sintered at 1000 °C for 30 h.

In terms of mechanical properties, the measurements show that the addition of nickel improves both the elastic modulus and the compressive strength of the porous Fe-based alloys considerably. Similar to the pure iron compositions, the presence of three hierarchical porosity levels results in much lower relative densities compared to previously reported iron-based porous materials. Because the measured mechanical properties still follow the trend expected from theoretical predictions, this reduction in relative density is achieved without compromising the mechanical efficiency of the porous structure. Compared to the pure iron counterparts with similar densities and processing conditions, the presence of nickel in the iron-based alloy was found to increase the elastic modulus of the porous structures by a factor of 7.5, and the compressive strength by a factor of 5.

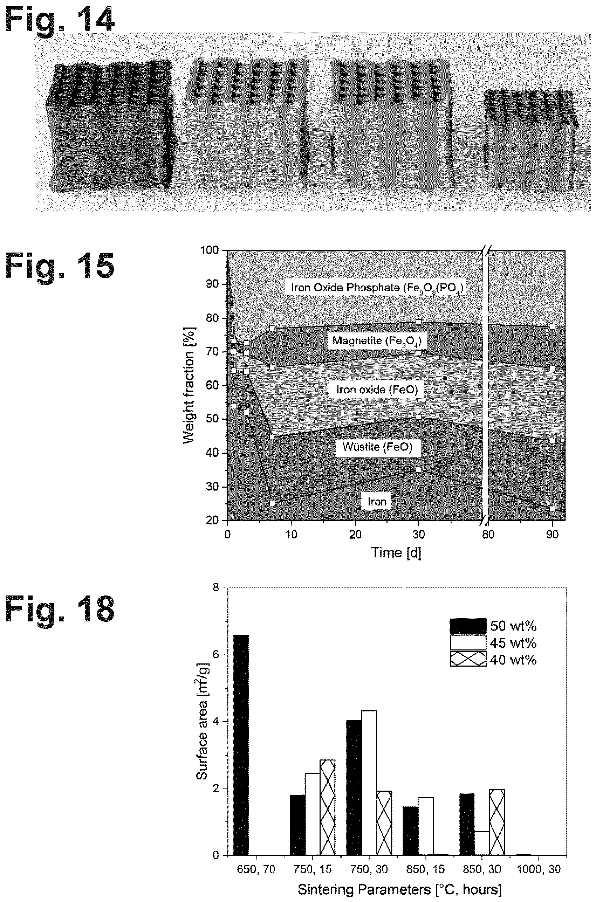

Iron-based porous structures can be used as a pure metal foams, as metal oxide foams or as foams of mixtures of metal and metal oxide, in a wide range of applications. Iron oxide foams with tailored chemical compositions can be obtained by heat-treating the 3D-printed green body objects at intermediate temperatures in the range of 550-650 °C. A two-hour heat treatment at 550 °C air atmosphere leads to the partial oxidation of magnetite to brown-colored maghemite. Red-colored hematite structures can be obtained by heat-treating a 3D-printed magnetite foam at 650 °C for 2 hours in air. Figure 14 shows such variants of 3D-printed lightweight, permeable, and high-surface-area structures according to the invention (from left to right): unreduced magnetite foam, maghemite foam obtained upon oxidation of magnetite at 550 °C for 2h (brown), 37 wt% maghemite/63 wt% hematite foam obtained upon oxidation of magnetite at 650 °C for 2h (red), sintered hematite foam obtained by sintering at 1000 °C for 2 h (silver). While these oxide foams are rather soft, their mechanical properties can be increased by the addition of binders or by sintering. For example, sintering the hematite specimen at 1000°C results in a mechanically stronger porous structure with a smooth and shiny surface whose silver color is characteristic of sintered hematite. Such oxide foams can potentially be utilized as substrates for gas catalysis, such as methanol oxidation [37], toluene cracking [38], or the decomposition of formic acid [39].

The porous metal structures themselves show the intrinsic magnetic properties and electrical resistivity of iron (0.00125 Ω m).

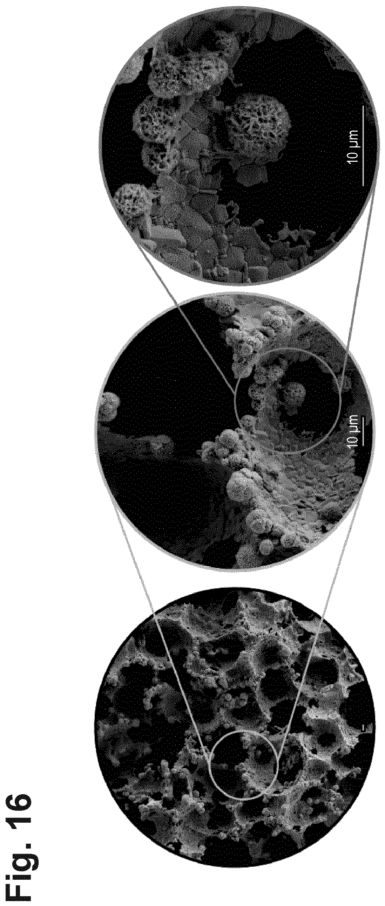

Mixed iron/iron oxide porous structures can be obtained through partial oxidation or iron oxide green bodies. The composition of crystalline phases present in an iron porous structure (850 °C for 30 h) after oxidative corrosion in phosphate buffer (37 °C) for 1-90 days, determined by Rietveld fitted XRD spectra, is shown in Figure 15 and Table 1. SEM images of an iron based porous structure sample sintered at 850 °C for 30 h, and subsequently corroded in phosphate buffer solution (37 °C) for 3 days, is shown in Figure 16.

**Table 1: Composition after corrosion in phosphate buffer (37 °C) for 1-90 days determined by Rietveld fitted XRD spectra**

| Time [d] | Composition [%] | | | | |
|---|---|---|---|---|---|
| | *Iron* | *Wüstite FeO* | *Iron oxide FeO* | *Magnetite Fe₃O₄* | *Iron oxide phosphate Fe₉O₈(PO₄)* |
| 1 | 53.9 | 10.5 | 5.7 | 3.2 | 26.7 |
| 3 | 52.1 | 12 | 5.6 | 2.9 | 27.3 |
| 7 | 25.1 | 19.5 | 20.7 | 11.7 | 22.8 |
| 30 | 35.2 | 15.5 | 19 | 9.2 | 21.1 |
| 90 | 23.5 | 20 | 21.6 | 12.4 | 22.5 |

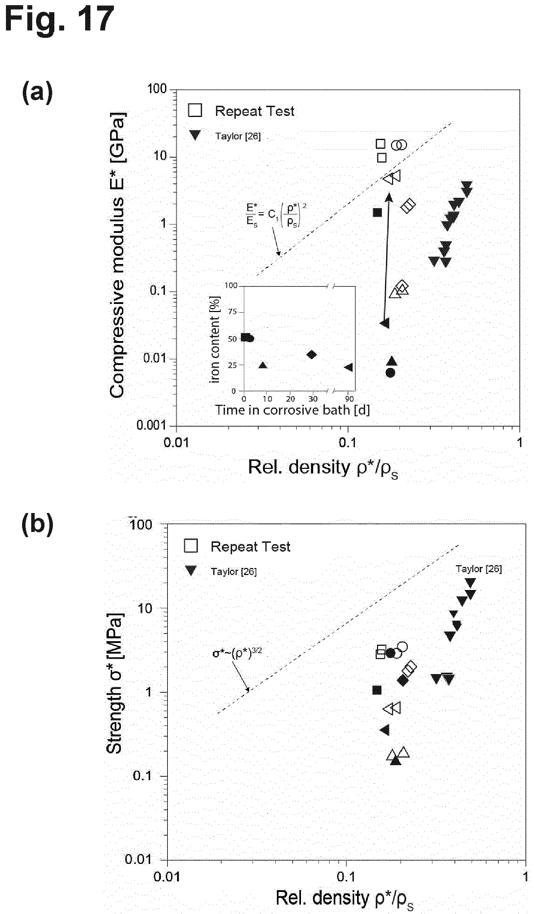

The (a) relative and absolute compressive modulus and the (b) relative and absolute yield strength, and (b) the relative strength of an iron-nickel based metallic foam according to the invention are shown in Figure 17, together with literature values (grey triangles, Taylor et al. [26]) and the theoretical values predicted by Gibson-Ashby for an open-cell structure.

The determined surface area of printed structures prepared from mixed foams containing different fractions of iron oxide particles and heat-treated at distinct reduction/sintering conditions is shown Figure 18.

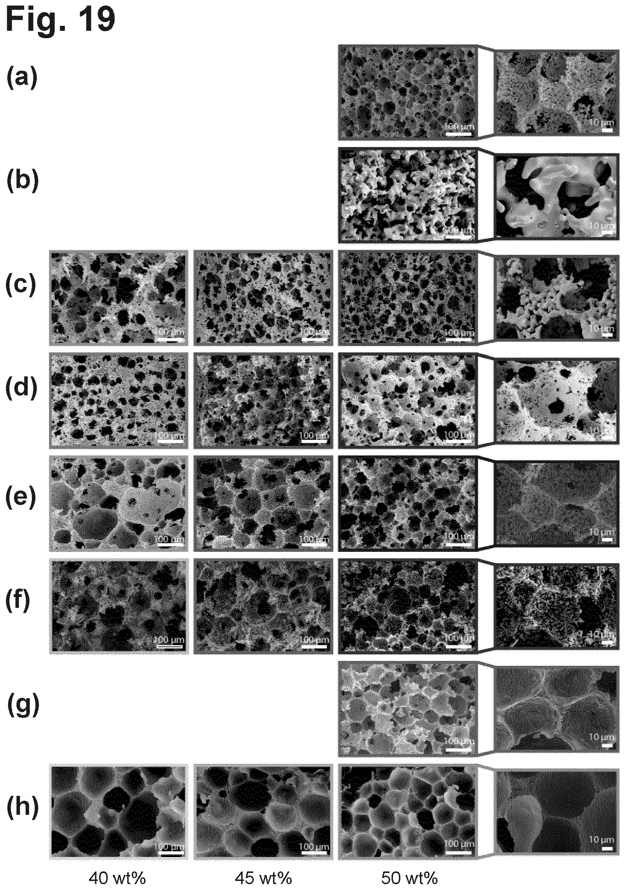

SEM images of metal foams containing different fractions of iron oxide particles (40, 45, and 50 wt% iron oxide compared to iron) and heat-treated at distinct reduction/sintering conditions are depicted in Figure 19. (a) 690 °C, 40 h, with sintering; (b) 1000 °C, 30 h; (c) 850 °C, 30 h; (d) 815 °C, 30 h; € 730 °C, 30h; (f) 730 °C, 15h; (g) 650 °C, 70h; (f) before reduction.

Because of the higher electrical resistivity of mixed iron/iron oxide foams compared to pure iron counterparts (0.7 Ω m for 35 wt% iron at room temperature), these porous materials can be used for resistive heating, for example as low-power resistive evaporators. It was experimentally observed that Joule heating with only 3 W power is enough to heat up an 8 mm wide cubic porous structure to a steady temperature of 180 °C. Steady state is reached due to a balance between the resistive heating and the convective cooling enabled by the high surface area of the structure (1m²/g).

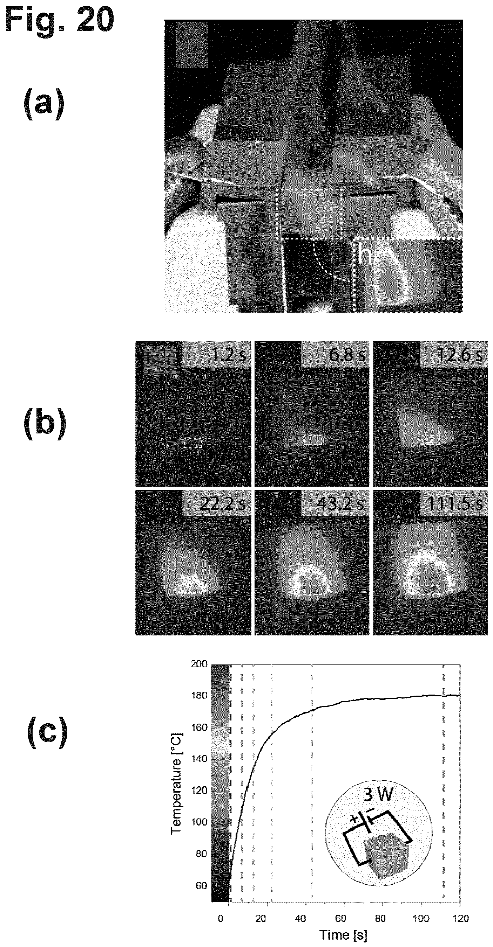

Figure 20 shows the application of metal/metal oxide foams according to the invention as resistive heating elements, for example for the on-demand vaporization of liquids. Figure 20(a) shows an experimental setup for liquid evaporation via resistive heating. A metal foam body 3c with 35 wt% Fe infused with etheric oil (limonene, 0.4 ml/g) is clamped between two electrodes 23, 23'. The metal foam body is subjected to an electric voltage resulting in a 3 W power output. The inserted image in the lower right corner shows an infrared image of the area marked by dotted lines. Figure 20(b) shows time-lapsed infrared images. The average temperature over time in the sampling area marked with dotted lines is displayed in Figure 20(c). The dashed lines indicate the time points of the snapshots in Figure 20(b).

Moreover, the very low density (< 1 g/cm³) of the metal foam structures according to the invention makes them sufficiently light to swim on water, which is remarkable in view of the density of pure iron (approx. 8 g/cm³). The hierarchical open-celled structure induced by the reduction procedure acts like a sponge to liquids that can wet the metal surface. Under favorable wetting conditions, capillary forces cause spontaneous absorption of at least 0.4 ml/g of liquid into the porous structure. The capillary forces were observed to be strong enough to suck liquid not only into the micro-pores but also into the 3D printed channels.

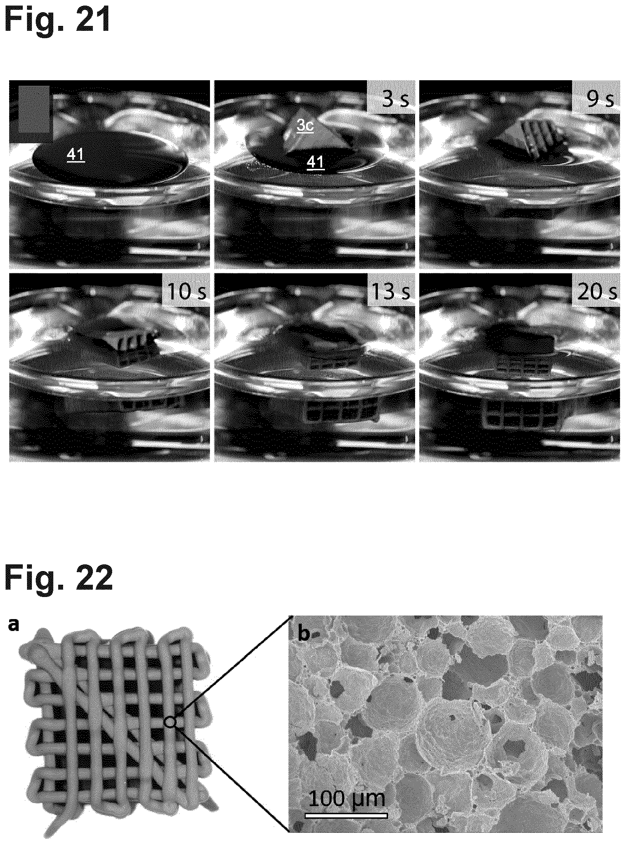

Because such metal foam bodies can float on water, they can be used as environmentally friendly oil absorbers. For this application, the surface of the metallic structure is hydrophobized with fumed silica via dip-coating. This hydrophobization procedure makes the surface wettable by oils and other apolar solvents, ensuring the spontaneous absorption of these liquids into the porous structure. As can be seen in Figure 21, such hydrophobized iron foam bodies can absorb hexane (dyed for better visibility) floating on a water surface very effectively. An oil droplet 41 on a water surface is absorbed by a metal foam body 3c within 20 s. The oil wets the hydrophobized surface of the metal foam, and the oil is contained within the micro-pores and macro-pores of the structure.

A particular advantage of such a use of porous structures as oil-absorbers comes from their ability to swim on water, which enables absorption of the oil right where it resides. As the oil replaces the air in the pores and channels, the density of the structures increases until they start to sink. This allows for crude oil-spill clean-up where the oil is contained in the metal bodies and then deposited down to the ocean floor.

Another method for producing metal foams according to the invention is using an emulsion-based ink system instead of a wet-foam based ink system. Compared to a wet-foam composition, the surfactant concentration is increased by a factor of 5-50 (examples: 1 mmol/g of hexylamine, 0.1 mmol/g of octyl gallate). 30-80 vol% of an hydrophobic organic solvent (such as n-Octane) are added dropwise while mixing. The pH can be adjusted to the pKa of the surfactant (with NaOH, or HCI, respectively) for improving emulsification. Binders like methylcellulose, PVA (poly vinyl alcohol), and PVP (poly vinyl pyrrolidone) can be used to stabilize the resulting emulsion (1-7 g/L). The emulsion based ink can be processed (printed, dried, sintered, reduced) in the same way as the foams. The macropores in this case result from the organic solvent droplets in the emulsion, similar to the air bubbles in the foam. A metal foam produced by 3D printing of such an emulsion based ink system is shown in Figure 22.

Furthermore, it was surprisingly found that the porous metal structures according to the invention show a special strain stiffening behavior.

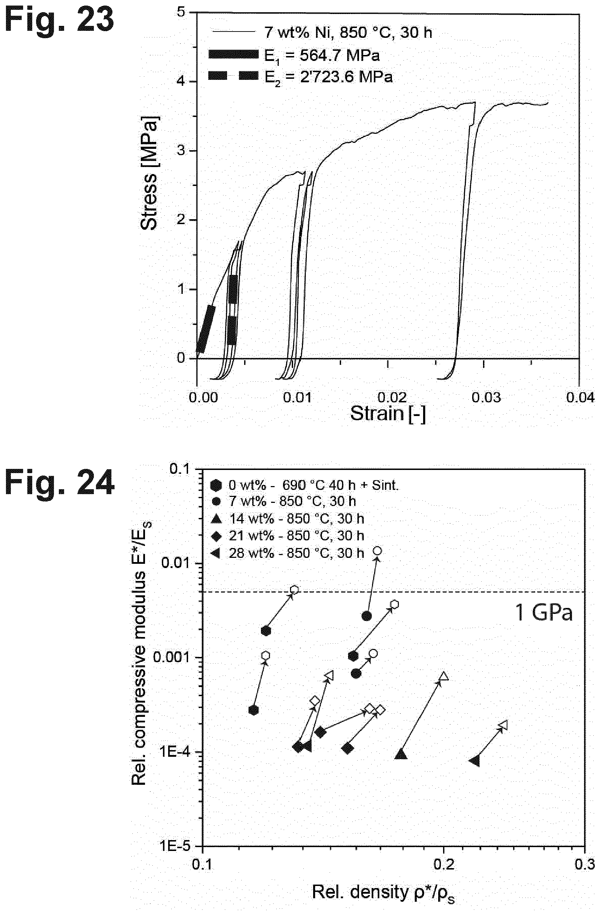

Iron foams and Nickel-iron alloy foams were subjected to strain-stress measurements, and the elasticity modulus E₁ was determined in the proportional range. The measurement was then repeated. Unexpectedly, the elasticity modulus E₂ found in this second run was considerably higher. For a nickel-iron alloy foam with 7 wt% Ni, reduced at 850 °C for 30 h, the elasticity modulus measured in a first run was E₁ = 565 MPa, and the second measured elasticity modulus was E₂ = 2724 MPa (cf. Figure 23). The same effect was found for all investigated metal foams according to the invention. Figure 24 shows a plot of the relative elasticity modulus vs. the relative density (in relation to the solid metal) for two iron foams (process parameter sets R2 and R7 in Table 2) and for nickel-iron alloy foams with 7, 14, 21, 28 wt% Ni (process parameter set R6 in Table 2). All samples show a similar increase of the elasticity modulus in combination with an increase of the density.

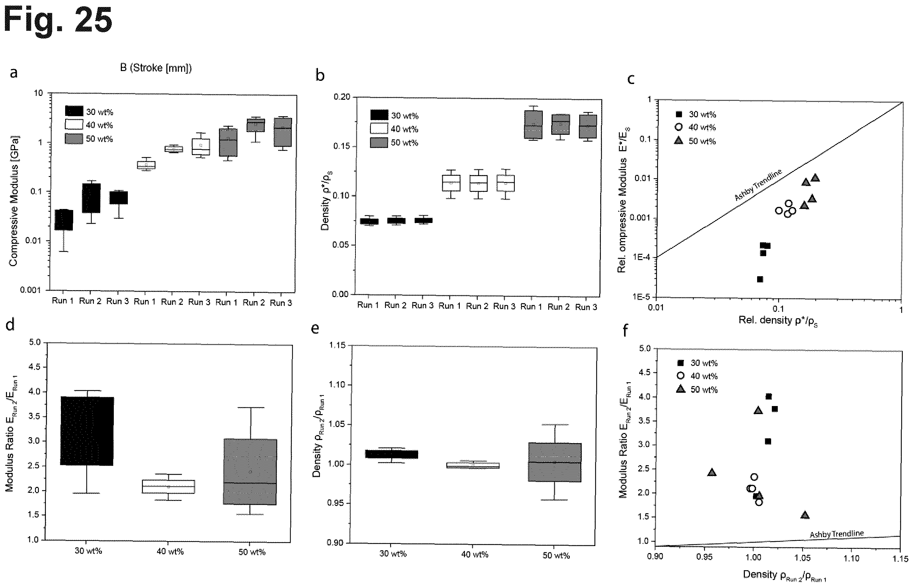

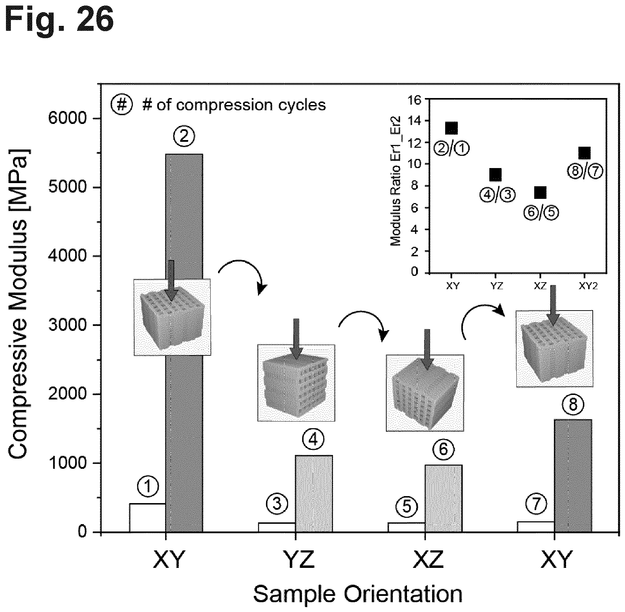

The compressive modulus will improve after compression along the compression direction by a factor of 2-20 with a Poisson's ratio < 0.01. This uniaxial stiffening will not be accompanied by a change in the density exceeding 2.5 % and is permanent, as long as only uniaxial stress is applied. (Figures 24, 25) Changing the direction of applied stress will reset the material and the effect reoccurs (Figure 26)

The effect of the increased elasticity modulus is permanent, as can be seen in Figure 23, where the data of a stress-strain measurement on a metal foam are shown. The sample was repeatedly released, and the measurement was subsequently resumed. In contrast to the initial proportional increase, resulting in elasticity modulus E₁, the elasticity modulus E₂ found after the first and all subsequent release and resumption cycles was considerably (almost 500%) higher. The sample as such remains undeformed (no increase in cross-section area).

Figures 25 (a) and (b) shows the averaged elasticity modulus and density of three metal foams (four samples each) with different solid loadings, determined in a first, a second and a third measurement run. The solid loading always refers to the weight percentage of the magnetite powder, unless specified otherwise Both values increase with the number of runs, for all metal foam types. However, the increase in density does not exceed 2.5%. Figure 25(c) shows the corresponding results in a relative modulus vs. relative density plot. The ratio of the elasticity modulus after the second run and after the first run is shown in Figure 25(d), while Figure 25(e) shows the corresponding ratio of the density. Figure 25(f) shows these values in a modulus ratio vs. density ratio plot. The results do not correspond to the predictions according to Ashby, E_{spec} = c₁ ρ_{spec}², with c₁ = 1, plotted as a line in Figures 25(c), (f).

The strain stiffening effect is uniaxial. Figure 26 shows the elasticity modulus determined in a series of uniaxial stress-strain measurements (marked with encircled numbers 1-8) along different axes, namely the normal to the XY plane (Z axis), the YZ plane (X axis), the XZ plane (Y axis), and again the XY plane (Z axis) of the metal foam body sample. The strain stiffening effect takes place independently along all three axes X, Y, Z. Interestingly, the strain stiffening effect, while being permanent when compression axes remain unchanged (cf. Figure 23), seems to be reset after the compression along all three axes, and the effect takes place a second time, as shown by the measurement pair 7, 8.

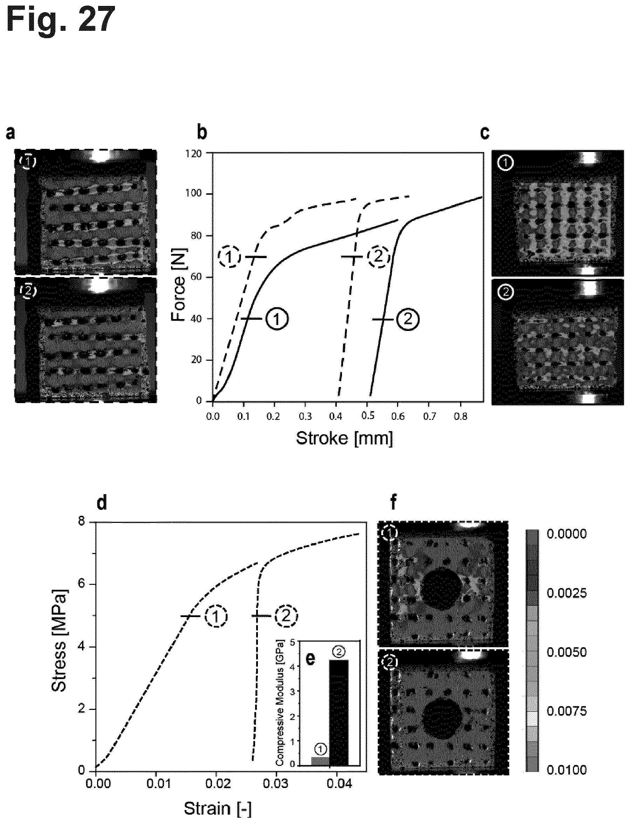

Figure 27 shows the results of measurements on metal foam samples for investigating local stiffening along the applied direction of stress. A first metal foam sample (low-carbon steel processed at 850 °C with a relative density of 0.11) is subjected to two compression cycles (1) and (2). The measured force is plotted against the stroke length (dashed lines in Figure 27(b). For both compression cycles, digital image correlation (DIC) shows the engineering strain along the compression direction at a force value of 70 N in a color map (cf. Figure 27(a)), with the compression axis along the perpendicular in the figures. A second metal foam sample (low-carbon steel processed at 1000 °C with a relative density of 0.22) is subjected to two compression cycles (1) and (2), and the measured force is plotted against the stroke width (full lines in Figure 27(b). Again, for both compression cycles, DIC strain images are obtained, at a force value of 40 N (Figure 27(c)).

Figure 27(d) shows a stress-strain curve measured on a third metal foam sample (low-carbon steel processed at 850 °C with a relative density of 0.21 and a 3.5 mm diameter hole drilled through the middle), with two subsequent compression cycles (1) and (2). The resulting compression moduli are shown in Figure 27(e). The corresponding DIC images of the non-dimensional engineering strain along compression direction are shown in Figure 27(f). The hole serves to show a localized strain stiffening in response to a defect.

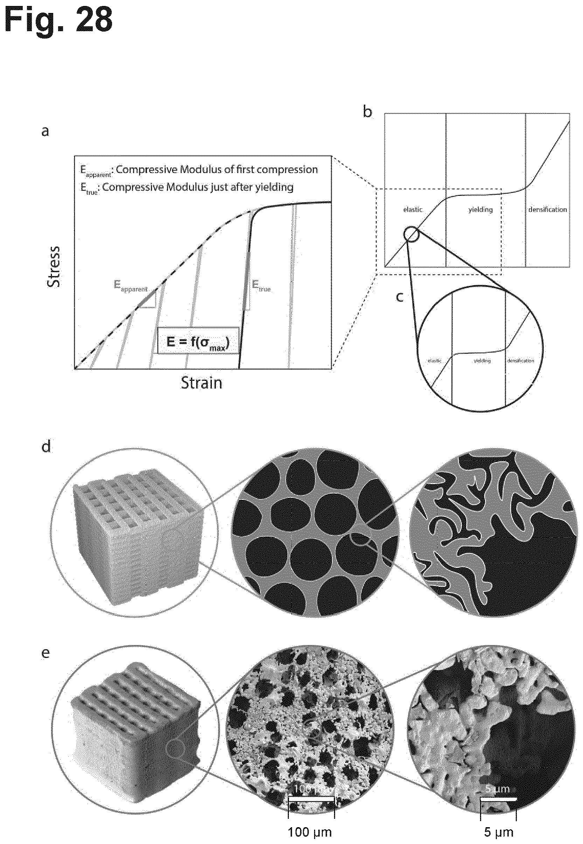

Without wishing to be bound to a certain theory, it is assumed that the strain stiffening effect occurs due to the superposition of stress responses at two different length scales, as is illustrated in Figure 28 (cf. Figure 28(a,b,c)). During compression, the local stress forces are large enough to trigger densification of the micropores in the walls of the macropores (cf. Figure 28(d,e)). This change is plastic, and it increases the connectivity of the macropore walls, which affects the global compression response. Since the densification of the microstructure occurs locally it is anisotropic and only affects the modulus in the compression direction.

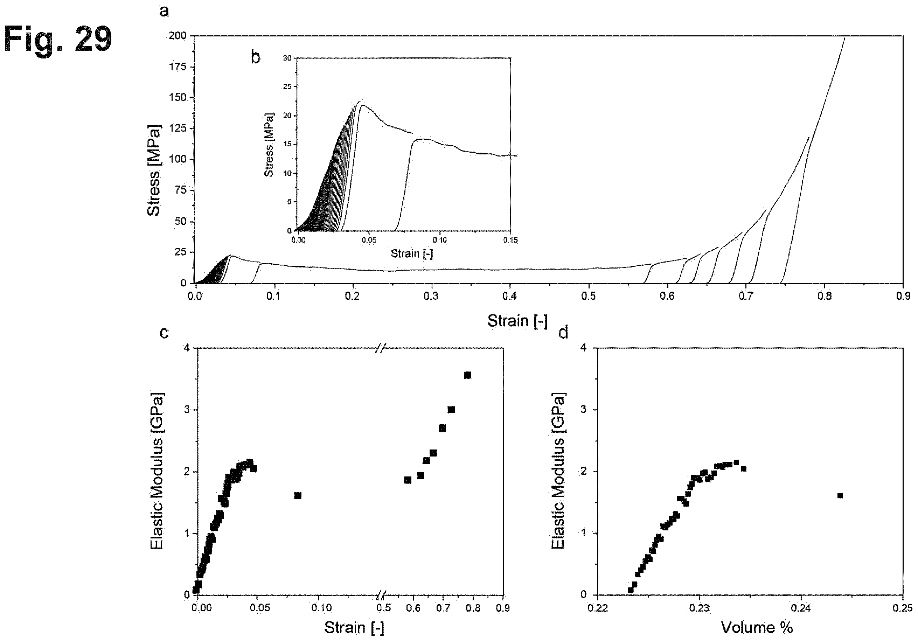

Figure 29(a, b) shows a stress-strain measurement curve on a metal foam sample (low-carbon steel processed at 850 °C with a relative density of 0.22), over the complete range of elasticity, yielding and densification, with repeated release of the sample. Figure 29(c) shows the elastic modulus E values obtained from the measurements as a function of the applied strain; and Figure 29(d) shows the obtained elastic modulus values in the elastic range, as a function of the solid ratio of the sample. As one can see, E reaches a maximum Eₜᵣᵤₑ when Eₐₚₚₐᵣₑₙₜ reaches the change from the elastic to the yielding regime. During the first compression, the stress-strain curve seemingly comprises the standard elastic phase, yielding and then densification found in foamed materials. However, the elastic phase is only pseudo elastic. Cyclic compression shows that the elastic modulus increases logarithmically with compression force until it reaches the true modulus Eₜᵣᵤₑ seen in the second compression. This effect occurs without significant global densification and is rather an effect of microstructural improvement.

It has been known for nanoporous gold structures obtained by dealloying Ag97Au3 to show on the nanoscale and large porosities a similar effect [40, 41]. However, the effect has so far neither been known to exist for microstructures in the length scale range of micrometers and with lower porosities, as they can be obtained with metal foams according to the invention, nor at such low strains (< 5%).

### Materials and Methods

Ink preparation: An aqueous suspension of 40-50 wt% metal oxide powder (Magnetite, Fe₃O₄, E8840, DOWA; Nickel(II)oxide green, 99%, abcr GmbH) and 3 µl/g of Hexylamine (99%, ACROS Organics) was homogenized by ball-milling with alumina balls (1-5 mm diameter) in a THINKY^{®} mixer (ARE-250) at 2000 rpm for 6 min (in two 3 min increments to avoid overheating). The standard composition contained 50 wt% magnetite powder. The slurry was then foamed at 800 rpm with an electronic stirrer (Heidolph, RZR 2102) until the desired stiffness was achieved (5-15 min). The resulting foam was left to rest overnight in a sealed container before printing volumetrically with a modified fused-filament-fabrication (FFF) printer (Ultimaker 2+) using 20 mL syringes and conical nozzles (0.84 mm diameter). Print speed was set at 10 mm/s and the extrusion rate was adjusted manually (100-150%) to achieve maximum print quality. PMMA plates, coated with commercial skin cream (NIVEA^{®}) to prevent sample adhesion, were used as substrates. The final samples were either dried at room temperature overnight or in the oven at 60 °C for 1 h.

Reduction of printed structures: The samples were reduced in a quartz tube oven (Gero, SR-A 100-500/12) with 12 l/min forming gas flow (95% N₂ and 5% H₂, Pangas). Various heating protocols (Table 2) were used to investigate the effect of reduction and sintering conditions on the microstructure and properties of the resulting porous metals (cf. Figures 7, 8).

**Table 2: Reduction and sintering parameters used to convert printed foam structures into porous metals**

| | Heating Rate [°C/min] | Temp. [°C] | Dwell Time [h] | Sintering Temp. [°C] | Sintering Time [h] |
|---|---|---|---|---|---|
| R1 | 1 | 650 | 70 | | |
| R2 | 3 | 690 | 40 | 850 | 2 |
| R3 | 3 | 750 | 15 | | |
| R4 | 3 | 750 | 30 | | |
| R5 | 3 | 850 | 15 | | |
| R6 | 3 | 850 | 30 | | |
| R7 | 3 | 1000 | 30 | | |

Oxidation of printed structures: As-printed magnetite foams were oxidized into different oxide phases (cf. Figure 14) by heating the specimens for 2 h at 650, 750 or 1000 °C (Naberthem, LE 6/11/P300). In addition to thermal oxidation, porous iron structures were also partially oxidized in a wet state by placing them in Dulbecco's Phosphate Buffered Saline (Sigma) at 37 °C for 1-90 days (cf. Figure 16, Table 1).

Surface hydrophobization: Hierarchical porous structures were hydrophobized (cf. Figure 21) by dip-coating the specimen in a suspension of 1 wt% hydrophobic fumed silica (Wacker, HDK H18) in hexane (>95%, Sigma) and then drying the coated sample at room temperature in vacuum.

Microstructural characterization: High-resolution SEM images of the foams before and after reduction were taken with a scanning electron microscope (LEO 1530 instrument, Zeiss GmbH, Germany).

Compositional characterization: X-ray diffraction spectra were collected with a powder diffractometer (PANalytical Empyrean) equipped with a Cu Kα X-ray tube (15 kV, 40 mA) and a monochromator. Samples were prepared by either crushing them into powder, if brittle, or compressing them into flat sheets, if tough. Particle induced X-Ray emission (PIXE) measurements were performed by Max Döbeli at the Laboratory of Ion Beam Physics, ETH Zürich. The carbon content of the iron samples was measured) with a carbon/sulfur analyzer (LECO CS230) using four 1 g samples per composition.

Mechanical characterization: Compressive strength and modulus were measured with a universal mechanical testing machine (AGS-X, Shimadzu) equipped with a 1000 N load cell. To ensure the opposing faces were parallel, the samples were ground into shape (Struers, LaboPol-25, 1000 grit SiC paper) using ethanol as a lubricant to prevent sample oxidation. Tests were performed by applying a constant displacement rate of 12 mm/min. The raw data were corrected to take into account the mechanical compliance of the testing machine. The machine compliance was measured with a 9 x 9 x 8 mm aluminum cube as a placeholder. The data was evaluated using Matlab^{®}. The reported compressive yield strength was determined with the 0.2% offset method.

Surface area characterization: N₂ gas sorption measurements were performed with a pore size analyzer (Quantachrome Autosorb iQ) at 77 K. Prior to the measurement the samples were outgassed in vacuum at 80 °C for 24 h. The surface area was determined by the Brunauer-Emmett-Teller method.

Absorption experiments: The oil absorption capability of the hydrophobized porous iron structure (cf. Figure 21) was evaluated by placing a water-floating sample in contact with hexane as an absorbent (>95%, Sigma). Hexane was died purple with 0.01 g/L of both Nile red (Merck) and methylene blue (Merck).

Conductivity and resistive heating experiments: The resistive heating capabilities of partially oxidized porous iron structures (cf. Figure 21) were evaluated by pressing the samples between copper tape and applying electrical current with a Laboratory Power Supply (EA-PS-3032-05-B). The temperature of the sample was measured with infrared imaging (IRCAM, Millenium 327k S/M). R-(+)-Limonene (Merck) was used as vaporizing agent.

The present invention is not to be limited in scope by the specific embodiments described herein. Indeed, various modifications of the present invention, in addition to those described herein, will be apparent to those skilled in the art from the foregoing description and accompanying drawings. Thus, such modifications are intended to fall within the scope of the appended claims. Additionally, various references are cited throughout the specification, the disclosures of which are each incorporated herein by reference in their entirety.

### List of Reference Numerals

- 1: foamed aqueous suspension, wet foam ink
- 11: precursor particle
- 12: surfactant molecule
- 13: water
- 14: gas bubble, foam cell
- 21: printing nozzle
- 22: tubular oven
- 23, 23': electrodes
- 3a: three-dimensional structure
- 3b: green body
- 3c: metal foam element
- 31: foam filament
- 32: first hierarchy pore, macropore
- 33: second hierarchy pore, mesopore
- 34: third hierarchy pore, micropore
- 41: oil droplet

### References

[1] L.-P. Lefebvre, J. Banhart, D. C. Dunand, Adv. Eng. Mater. 2008, 10, 775.
[2] J. Erlebacher, M. J. Aziz, A. Karma, N. Dimitrov, K. Sieradzki, Nature 2001, 410, 450.
[3] M. E. Cox, D. C. Dunand, Mat Sci Eng a-Struct 2011, 528, 2401.
[4] E. Linul, L. Marsavina, P. A. Linul, J. Kovacik, Compos Struct 2019, 209, 490.
[5] M. H. Sun, S. Z. Huang, L. H. Chen, Y. Li, X. Y. Yang, Z. Y. Yuan, B. L. Su, Chem Soc Rev 2016, 45, 3479.
[6] N. Kleger, M. Cihova, K. Masania, A. R. Studart, J. F. Loffler, Adv Mater 2019, 31.
[7] P. Sharma, P. M. Pandey, Mater Design 2018, 160, 442.
[8] R. Orinakova, R. Gorejova, Z. O. Kralova, L. Haverova, A. Orinak, I. Maskal'ova, M. Kupkova, M. Dzupon, M. Balaz, M. Hrubovcakova, T. Sopcak, A. Zubrik, M. Orinak, Appl Surf Sci 2020, 505.
[9] S. Ray, U. Thormann, M. Eichelroth, M. Budak, C. Biehl, M. Rupp, U. Sommer, T. El Khassawna, F. I. Alagboso, M. Kampschulte, M. Rohnke, A. Henss, K. Peppler, V. Linke, P. Quadbeck, A. Voigt, F. Stenger, D. Karl, R. Schnettler, C. Heiss, K. S. Lips, V. Alt, Biomaterials 2018, 157, 1.
[10] Y. Conde, J. F. Despois, R. Goodall, A. Marmottant, L. Salvo, C. San Marchi, A. Mortensen, Adv Eng Mater 2006, 8, 795.
[11] A. R. Studart, A. Nelson, B. Iwanovsky, M. Kotyrba, A. A. Kundig, F. H. Dalla Torre, U. T. Gonzenbach, L. J. Gauckler, J. F. Loffler, Journal of Materials Chemistry 2012, 22, 820.
[12] Y. J. Quan, F. M. Zhang, H. Rebl, B. Nebe, O. Kessler, E. Burkel, Mat Sci Eng a-Struct 2013, 565, 118.
[13] A. E. Jakus, N. R. Geisendorfer, P. L. Lewis, R. N. Shah, Acta Biomater 2018, 72, 94.
[14] A. R. Studart, Chemical Society Reviews 2016, 45, 359.
[15] A. R. Studart, R. M. Erb, R. Libanori, in Hybrid and Hierarchical Composite Materials, DOI: 10.1007/978-3-319-12868-9_8 (Eds: C.-S. Kim, C. Randow, T. Sano), Springer International Publishing 2015, Ch. 8, p. 287.
[16] B. Gorny, T. Niendorf, J. Lackmann, M. Thoene, T. Troester, H. J. Maier, Materials Science and Engineering: A 2011, 528, 7962.
[17] L. S. Bertol, W. K. Júnior, F. P. d. Silva, C. Aumund-Kopp, Materials & Design 2010, 31, 3982.
[18] L. Yang, O. Harrysson, D. Cormier, H. West, H. Gong, B. Stucker, JOM 2015, 67, 608.
[19] L. E. Murr, S. M. Gaytan, F. Medina, H. Lopez, E. Martinez, B. I. Machado, D. H. Hernandez, L. Martinez, M. I. Lopez, R. B. Wicker, J. Bracke, Philosophical Transactions of the Royal Society A: Mathematical, Physical and Engineering Sciences 2010, 368, 1999.
[20] P. Heinl, L. Müller, C. Körner, R. F. Singer, F. A. Müller, Acta Biomater. 2008, 4, 1536.
[21] C. Xu, Q. H. Wu, G. L'Esperance, L. L. Lebel, D. Therriault, Mater Design 2018, 160, 262.
[22] M. Calvo, A. E. Jakus, R. N. Shah, R. Spolenak, D. C. Dunand, Adv Eng Mater 2018, 20.
[23] A. E. Jakus, S. L. Taylor, N. R. Geisendorfer, D. C. Dunand, R. N. Shah, Adv Funct Mater 2015, 25, 6985.
[24] B. Y. Ahn, D. Shoji, C. J. Hansen, E. Hong, D. C. Dunand, J. A. Lewis, Adv. Mater. 2010, 22, 2251.
[25] S. L. Taylor, A. E. Jakus, R. N. Shah, D. C. Dunand, Adv. Eng. Mater. 2017, 19, 1600365.
[26] S. L. Taylor, A. E. Jakus, R. N. Shah, D. C. Dunand, Adv Eng Mater 2017, 19.
[27] C. Minas, D. Carnelli, E. Tervoort, A. R. Studart, Adv Mater 2016, 28, 9993.
[28] C. Minas, J. Carpenter, J. Freitag, G. Landrou, E. Tervoort, G. Habert, A. R. Studart, Acs Sustain Chem Eng 2019, 7, 15597.
[29] D. G. Moore, L. Barbera, K. Masania, A. R. Studart, Nature Materials 2020, 19, 212.
[30] L. Alison, S. Menasce, F. Bouville, E. Tervoort, I. Mattich, A. Ofner, A. R. Studart, Sci Rep-Uk 2019, 9.
[31] M. R. Sommer, M. Schaffner, D. Carnelli, A. R. Studart, Acs Applied Materials & Interfaces 2016, 8, 34677.
[32] C. Kenel, N. R. Geisendorfer, R. N. Shah, D. C. Dunand, Addit Manuf 2021, 37.
[33] R. Murakami, S. Kobayashi, M. Okazaki, A. Bismarck, M. Yamamoto, Front Chem 2018, 6.
[34] U. T. Gonzenbach, A. R. Studart, E. Tervoort, L. J. Gauckler, Angewandte Chemie-International Edition 2006, 45, 3526.
[35] H. Ovaici, M. R. Mackley, G. H. McKinley, S. J. Crook, J Rheol 1998, 42, 125.
[36] D. Kokkinis, M. Schaffner, A. R. Studart, Nat Commun 2015, 6.
[37] M. Bowker, E. K. Gibson, I. P. Silverwood, C. Brookes, Faraday Discuss 2016, 188, 387.
[38] X. H. Zou, T. H. Chen, H. B. Liu, P. Zhang, D. Chen, C. Z. Zhu, Fuel 2016, 177, 180.
[39] S. A. Halawy, S. S. Al-Shihry, M. A. Mohamed, Catal Lett 1997, 48, 247.
[40] S. Shi, Y. Li, B. N. Ngo-Dinh, J. Markmann, J. Weissmuller, Science 371, 1026-1033 (2021).
[41] B. Zandersons, L. Lührs, Y. Li, J. Weissmüller, Acta Mater 2021, 215, 116979.

## Claims

1. An aqueous suspension for producing porous metallic structures, the aqueous suspension comprising
2-49 vol% of a mixture of at least one chemical compound comprising a metal atom, wherein said at least one compound is solid at room temperature, has the form of a powder, and is suspended in water, and
0.01-10% mol/mol of a surfactant.

2. The aqueous suspension according to claim 1, wherein one or more of said chemical compounds comprising a metal atom is a compound that is reducible to metal in a gaseous atmosphere.

3. The aqueous suspension according to claim 1 or 2, wherein the mixture of at least one chemical compound comprising a metal atom is a metal oxide powder, for example Fe₃O₄, or NiO, or a mixture thereof.

4. The aqueous suspension according to claim 1, wherein one or more of said chemical compounds comprising a metal atom is an metal hydride, for example TiHₓ, PdHₓ, ZrHₓ, or MgH₂.

5. The aqueous suspension according to claim 1, wherein one or more of said chemical compounds comprising a metal atom is a metal carbonyl compound, for example Rh₂(CO)₈, or Ru(CO)₅.

6. The aqueous suspension according to any of the preceding claims, wherein the aqueous suspension is foamed with a gas, for example air or an inert gas.

7. The aqueous suspension according to any of the preceding claims, wherein the aqueous suspension is emulsified with 30-80 vol% of a lipophilic organic solvent, for example n-octane.

8. The aqueous suspension according to any of the preceding claims, wherein the aqueous suspension comprises 1-7 g/l of a a binder, e.g. methylcellulose, PVA (poly vinyl alcohol), or PVP (poly vinyl pyrrolidone), or a mixture thereof.

9. A method for producing a porous metallic material, comprising the steps:
- providing an aqueous suspension according to any of claims 1 to 8; comprising a mixture of at least one chemical compound comprising a metal atom;
- foaming said aqueous suspension to a foam, or emulsifying said aqueous suspension to an emulsion;
- forming with said foam or emulsion a three-dimensional structure;
- drying said three-dimensional structure, resulting in a dry structure; and
- subjecting the dry structure to process conditions that result in the conversion of the chemical compounds comprising a metal atom to metal, resulting in a metallic structure.

10. The method according to claim 9, wherein the metallic structure is sintered.

11. The method according to claim 9 or 10, wherein one or more of said chemical compounds comprising a metal atom is a compound that is reducible to metal in a gaseous atmosphere; and wherein the dry structure is reduced by subjecting it to a reducing atmosphere, resulting in a metallic structure.

12. The method according to claim 9 or 10, wherein one or more of said chemical compounds comprising a metal atom is an interstitial metal hydride; and wherein the dry structure is subjected to a temperature under which the hydrogen is released as hydrogen gas, resulting in a metallic structure.

13. The method according to any of claims 9 to 12, wherein the three-dimensional structure is formed by additive manufacturing, for example by three-dimensional printing.

14. The method according to any of claims 9 to 13, wherein after the reduction step, the metallic structure is at least partially oxidized.

15. Use of a material produced according to a method of any of claims 9 to 14, as a resistive heating element, or as a cooling element, or for absorbing lipophilic substances floating on water, or as a heterogeneous catalyst, or as a carrier structure for a heterogenous catalyst, or as a filtration element.
